(19) Europäisches Patentamt
European Patent Office
Office européen des brevets

(11) EP 4 553 988 A1

(12) EUROPEAN PATENT APPLICATION
published in accordance with Art. 153(4) EPC

(43) Date of publication:
14.05.2025 Bulletin 2025/20

(51) International Patent Classification (IPC):
H01M 50/489 (2021.01)  H01M 50/40 (2021.01)

(21) Application number: 23917094.7

(22) Date of filing: 12.10.2023

(52) Cooperative Patent Classification (CPC):
H01M 4/02; H01M 50/40; H01M 50/409;
H01M 50/46; H01M 50/489; H01M 50/491;
Y02E 60/10

(86) International application number:
PCT/CN2023/124304

(87) International publication number:
WO 2024/152626 (25.07.2024 Gazette 2024/30)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 16.01.2023  CN 202310075434

(71) Applicant: Contemporary Amperex Technology
(Hong Kong) Limited
Central, Hong Kong (CN)

(72) Inventors:
• LI, Quanguo
  Ningde, Fujian 352100 (CN)
• JIN, Haizu
  Ningde, Fujian 352100 (CN)

(74) Representative: Kraus & Lederer PartGmbB
Thomas-Wimmer-Ring 15
80539 München (DE)

(54) ELECTRODE ASSEMBLY, BATTERY CELL, BATTERY, AND ELECTRIC DEVICE

(57) The present application provides an electrode assembly, a battery cell, a battery, and an electrical device. The electrode assembly comprises a positive electrode plate, a negative electrode plate, and a separator, where the separator is disposed between the positive electrode plate and the negative electrode plate; the expansion layer is disposed between the positive electrode plate and the negative electrode plate, and the expansion layer is used for expansion in response to a preset condition to cut off an electrical connection between the positive electrode plate and the negative electrode plate.

5

Fig. 1

**Description**

**CROSS REFERENCE TO RELATED APPLICATION**

The present application claims priority to Chinese patent application No. 202310075434.7, entitled "ELECTRODE ASSEMBLY, BATTERY CELL, BATTERY, AND ELECTRICAL DEVICE" filed on January 16, 2023, which is incorporated herein by reference in its entirety.

**TECHNICAL FIELD**

The present application relates to the field of battery technology, specifically to an electrode assembly, a battery cell, a battery, and an electrical device.

**BACKGROUND**

As a new energy source, batteries have become an indispensable energy source in industry and society. With the development of battery technology, batteries have been increasingly widely used in fields such as electronic devices, electric vehicles, electric tools, and aerospace equipment. The demand for batteries in these fields is increasing, and the requirements for battery performance are also increasing. Safety performance is one of the important performance concerns in various application fields. Therefore, how to enable a battery to have good safety performance has become one of the urgent technical problems to be solved in the field of battery technology.

**SUMMARY**

The present application provides an electrode assembly, a battery cell, a battery, and an electrical device, where the electrode assembly enables the battery to have good safety performance.
In a first aspect, the present application provides an electrode assembly, including a positive electrode plate, a negative electrode plate, and a separator, where the separator is disposed between the positive electrode plate and the negative electrode plate; an expansion layer is disposed between the positive electrode plate and the negative electrode plate, and the expansion layer is configured for expanding in response to a preset condition to cut off an electrical connection between the positive electrode plate and the negative electrode plate.
In the electrode assembly provided in the present application, the expansion layer is provided between the positive electrode plate and the negative electrode plate; when the electrode assembly is applied to a battery, metal dendrites are produced inside the battery during use; the dendrites growing to a certain extent puncture the separator and electrically connect the positive electrode plate and the negative electrode plate to cause short circuits inside the battery, then the preset condition is satisfied, and the expansion layer expands in response to the preset condition to spread short-circuit points of the positive electrode plate and the negative electrode plate and wrap the dendrites at the short-circuit points, so that the electrical connection between the positive electrode plate and the negative electrode plate is cut off, the occurrence of thermal runaway inside the battery is reduced, and the battery has good safety performance.
According to any of the foregoing embodiments in the first aspect of the present application, the preset condition includes a preset temperature and/or a preset pressure, which facilitates the expansion of the expansion layer to quickly cut off the electrical connection between the positive electrode plate and the negative electrode plate and further reduce the occurrence of thermal runaway inside the battery, thereby improving the safety performance of the battery.
According to any of the foregoing embodiments in the first aspect of the present application, the preset condition includes a preset temperature, which is greater than or equal to 80°C, optionally 110°C to 150°C. The preset condition includes the preset temperature within the above range, which facilitates the expansion of the expansion layer in response to the preset condition to further reduce the occurrence of thermal runaway inside the battery, thereby further improving the safety performance of the battery.
According to any of the foregoing embodiments in the first aspect of the present application, an expansion rate of the expansion layer in a thickness direction under the preset condition is 50% to 2000%, optionally 150% to 1000%. The expansion layer having the expansion rate within the above range can not only spread more short-circuit points, but also wrap more dendrites on the short-circuit points, to cut off more electrical connection points between the positive electrode plate and the negative electrode plate and further reduce the occurrence of thermal runaway inside the battery, thereby improving the safety performance of the battery.
According to any of the foregoing embodiments in the first aspect of the present application, the expansion layer includes thermal expansion particles and a conductive agent, and based on a mass of the expansion layer, a mass ratio of the thermal expansion particles to the conductive agent is (1-6): 1. The expansion layer includes the thermal expansion particles and the conductive agent, and when the mass ratio of the thermal expansion particles to the conductive agent satisfies the above relationship, the occurrence of thermal runaway inside the battery can be reduced, and the resistance of the expansion layer can also be reduced, thereby improving the safety and cycle performance of the battery.

According to any of the foregoing embodiments in the first aspect of the present application, a mass percentage of the thermal expansion particles in the expansion layer is 60% to 85%. When the mass percentage of the thermal expansion particles in the expansion layer is within the above range, the thermal runaway of the battery can be reduced, thereby improving the safety performance of the battery.

According to any of the foregoing embodiments in the first aspect of the present application, a mass percentage of the conductive agent in the expansion layer is 15% to 35%. When the mass percentage of the conductive agent in the expansion layer is within the above range, the resistance of the expansion layer can be reduced to improve the cycle performance of the battery.

According to any of the foregoing embodiments in the first aspect of the present application, a material of the thermal expansion particles includes at least one of polyacrylonitrile, polymethacrylonitrile, N,N'-dimethyl-N,N'-dinitroso-p-terephthalamide, barium azodicarboxylate, or diisopropyl azodicarboxylate.

According to any of the foregoing embodiments in the first aspect of the present application, the expansion layer further includes a preset temperature regulator, and a mass percentage of the preset temperature regulator in the expansion layer is 0.1% to 15%, optionally 0.5% to 10%. The expansion layer includes the preset temperature regulator, and when the mass percentage of the preset temperature regulator in the expansion layer is within the above range, the response sensitivity of the expansion layer can be improved to further improve the safety performance of the battery.

According to any of the foregoing embodiments in the first aspect of the present application, the preset temperature regulator includes at least one of vinylidene chloride, acrylic ester, methacrylonitrile, sodium chloride, citric acid, or potassium dichromate.

According to any of the foregoing embodiments in the first aspect of the present application, the expansion layer is disposed on a side of the negative electrode plate facing the separator.

According to any of the foregoing embodiments in the first aspect of the present application, the expansion layer is disposed on a side of the positive electrode plate facing the separator.

According to any of the foregoing embodiments in the first aspect of the present application, the expansion layer is disposed on a side of the separator.

According to any of the foregoing embodiments in the first aspect of the present application, the expansion layer includes at least one of a stripe-like expansion layer, a netlike expansion layer, or a dotlikelike expansion layer. The expansion layer in the above shape can help improve the safety and cycle performance of the battery.

According to any of the foregoing embodiments in the first aspect of the present application, the positive electrode plate includes a positive electrode current collector and a positive electrode active material layer, the positive electrode active material layer is disposed on a side of the positive electrode current collector and includes a positive electrode active material, and a thickness H1 of the expansion layer, a thickness H2 of the separator, and a thickness H3 of the positive electrode plate satisfy:

$$\alpha * H1 + (A * H3 * \rho_a)/(B/\rho_b) \leq H2$$

where $\alpha$ represents the expansion rate of the expansion layer in the thickness direction under the preset condition, A represents a gram capacity of the positive electrode plate, $\rho_a$ represents a density of the positive electrode active material, B represents a gram capacity of sodium metal, and $\rho_b$ represents a density of sodium metal. When the thickness H1 of the expansion layer, the thickness H2 of the separator, and the thickness H3 of the positive electrode plate satisfy the above relationship, the expansion layer after expansion can spread dendrites at short-circuit points of the positive electrode plate and the negative electrode plate, and can also reduce the probability that dendrites formed in other regions puncture the separator, thereby further improving the safety performance of the battery.

According to any of the foregoing embodiments in the first aspect of the present application, $\alpha$ is 150% to 2000%; and/or A is 90 mAh/g to 150 mAh/g.

According to any of the foregoing embodiments in the first aspect of the present application, the thickness H1 of the expansion layer is 0.1 $\mu$m to 10 $\mu$m. The thickness of the expansion layer within the above range enables the expansion layer after expansion to spread the dendrites at short-circuit points of the positive electrode plate and the negative electrode plate, and can further reduce the probability that the dendrites formed in other regions puncture the separator, thereby further improving the safety performance of the battery.

According to any of the foregoing embodiments in the first aspect of the present application, the thickness H2 of the separator is 9 $\mu$m to 50 $\mu$m. The thickness of the separator within the above range can help reduce the probability that dendrites puncture the separator, which is beneficial to improving the safety performance of the battery.

According to any of the foregoing embodiments in the first aspect of the present application, the thickness H3 of the positive electrode plate is 50 $\mu$m to 300 $\mu$m. The thickness of the positive electrode plate within the above range can help reduce the puncture of the separator by dendrites and improve the cycle performance of the battery.

According to any of the foregoing embodiments in the first aspect of the present application, an air permeability of the separator is 120s/100cc to 180s/100cc.

According to any of the foregoing embodiments in the first aspect of the present application, a puncture strength of the separator is 0.05 N/$\mu$m to 0.5 N/$\mu$m.

According to any of the foregoing embodiments in the first aspect of the present application, an elongation of the separator at break is greater than or equal to 7%.

According to any of the foregoing embodiments in the first aspect of the present application, a longitudinal tensile strength of the separator is greater than or equal to 120 MPa.

According to any of the foregoing embodiments in the first aspect of the present application, a transverse tensile strength of the separator is greater than or equal to 10 MPa, optionally 20 MPa to 80 MPa.

According to any of the foregoing embodiments in the first aspect of the present application, a surface density of the separator is 3 g/m$^2$ to 6 g/m$^2$.

According to any of the foregoing embodiments in the first aspect of the present application, the separator includes a porous structure with a plurality of pores and has a porosity of 20% to 50%.

In a second aspect, the present application provides a battery cell, including the electrode assembly described in the first aspect of the present application.

In a third aspect, the present application provides a battery, including the battery cell in the second aspect of the present application.

In a fourth aspect, the present application provides an electrical device, including the battery in the third aspect of the present application.

The above description is only a summary of the technical solutions of the present application. In order to understand the technical means in the present application more clearly, it can be implemented in accordance with the content of the description; and in order to make the above and other objectives, features and advantages of the present application more obvious and easier to understand, specific embodiments of the present application are cited below.

## BRIEF DESCRIPTION OF THE DRAWINGS

By reading the detailed description of optional embodiments below, various other advantages and benefits will become clear to those skilled in the art. The accompanying drawings are only used for illustrating the optional embodiments and are not considered as limitations on the present application. Moreover, in all the drawings, the same reference numerals denote the same components.

Fig. 1 illustrates a schematic structural view of a battery cell provided in some embodiments of the present application.
Fig. 2 illustrates an exploded view of the battery cell in Fig. 1.
Fig. 3 illustrates a schematic structural view of a battery module provided in some embodiments of the present application.
Fig. 4 illustrates a schematic structural view of a battery pack provided in some embodiments of the present application.
Fig. 5 illustrates an exploded view of the battery pack in Fig. 4.
Fig. 6 illustrates a schematic structural view of an electrical device provided in some embodiments of the present application.

The accompanying drawings are not drawn to actual scale. Reference numerals are described as follows:
1 - battery pack, 2 - upper box, 3 - lower box, 4 - battery module, 5 - battery cell, 51 - shell, 52 - electrode assembly, 53 - cover plate.

## DETAILED DESCRIPTION

The embodiments of the technical solutions of the present application will be described in detail below with reference to the accompanying drawings. The following embodiments are only used for illustrating the technical solutions of the present application more clearly, and therefore are only examples with no intention of limiting the protection scope of the present application.

Unless otherwise defined, all technical and scientific terms used herein have the same meanings as those commonly understood by technical personnel in the technical field of the present application; the terms used herein are only for the purpose of describing specific embodiments and are not intended to limit the present application; and the terms "include" and "have" in the description and claims of the present application, the above accompanying drawings, and any variations thereof, are intended to cover non-exclusive inclusion.

In the description of the embodiments of the present application, the technical terms "first", "second", and the like are only used for distinguishing different objects and cannot be understood as indicating or implying relative importance or implying a quantity, specific order, or primary and secondary relationship of the indicated technical features. In the description of the embodiments of the present application, the meaning of "a plurality of" is two or more, unless otherwise specifically defined.

The phrase "embodiment" referred to herein means that specific features, structures, or characteristics described in conjunction with the embodiment may be included in at least one embodiment of the present application. The phrase appearing at various places in the description does not necessarily refer to the same embodiment, or an independent or alternative embodiment exclusive of other embodiments. Those skilled in the art understand explicitly and implicitly that an embodiment described herein may be combined with another embodiment.

In the description of the embodiments of the present application, the term "and/or" in the present application is merely an association relationship for describing associated objects, and represents that three relationships may exist. For example, A and/or B may represent the following three cases: A exists alone, both A and B exist, and B exists alone. In addition, the character "/" herein generally indicates an "or" relationship between successive associated objects.

In the description of the embodiments of the present application, the term "a plurality of" means two (inclusive) or more. Similarly, "a plurality of groups" means two (inclusive) or more groups, and "a plurality of pieces" means two (inclusive) or more pieces.

In the description of the embodiments of the present application, an orientation or positional relationship indicated by the technical term "center", "longitudinal", "transverse", "length", "width", "wall thickness", "upper", "lower", "front", "rear", "left", "right", "vertical", "horizontal", "top", "bottom", "inner", "outer", "clockwise", "counterclockwise", "axial direction", "radial direction", "circumferential direction", or the like is based on an orientation or positional relationship shown in the accompanying drawings, and is merely for ease of describing the embodiments of the present application and simplifying the description, but does not indicate or imply that an apparatus or an element referred to must have a specific orientation or be constructed and operated in a specific orientation, and therefore cannot be understood as a limitation on the embodiments of the present application.

In the description of the embodiments of the present application, unless otherwise explicitly specified and defined, the technical terms "mounted", "connected", "connection", "fixed", etc. should be understood in a broad sense, for example, the "connection" may be fixed connection, detachable connection, integration, mechanical connection, electrical connection, direct connection, indirect connection via an intermediate medium, internal communication between two elements, or interaction between two elements. Those of ordinary skill in the art may appreciate the specific meanings of the foregoing terms in the embodiments of the present application according to specific circumstances.

In the present application, a battery is mainly composed of one or more battery cells, each of which includes a shell, an end cover, and an electrode assembly accommodated in the shell, where the electrode assembly is a component that undergoes electrochemical reactions in the battery cell. Specifically, the electrode assembly is mainly formed by winding or stacking a positive electrode plate and a negative electrode plate, and a separator is usually provided between the positive electrode plate and the negative electrode plate.

In the charging and discharging process of the battery, metal ions deposit unevenly on the surface of the negative electrode plate. As the number of charging and discharging cycles of the battery increases, dendrites will form. When the dendrites overgrow and puncture the separator, the positive electrode plate and the negative electrode plate may be short-circuited, and even the risk such as fire or explosion may occur, resulting in a decline in the safety performance of the battery.

In view of this, the present application provides an electrode assembly, a battery cell, a battery, and an electrical device, where the electrode assembly enables the battery to have good safety performance.

## Electrode assembly

In a first aspect, the present application provides an electrode assembly, including a positive electrode plate, a negative electrode plate, and a separator, where the separator is disposed between the positive electrode plate and the negative electrode plate; an expansion layer is disposed between the positive electrode plate and the negative electrode plate, and the expansion layer is used for expanding in response to a preset condition to cut off an electrical connection between the positive electrode plate and the negative electrode plate.

In the electrode assembly provided in the present application, the expansion layer is provided between the positive electrode plate and the negative electrode plate; when the electrode assembly is applied to a battery, metal dendrites are produced inside the battery during use; the dendrites growing to a certain extent puncture the separator and electrically connect the positive electrode plate and the negative electrode plate to cause short circuits inside the battery, then the preset condition is satisfied, and the expansion layer expands in response to the preset condition to spread short-circuit points of the positive electrode plate and the negative electrode plate and wrap the dendrites at the short-circuit points, so that the electrical connection between the positive electrode plate and the negative electrode plate is cut off, the occurrence of thermal runaway inside the battery is reduced, and the battery has good safety performance.

In some embodiments of the present application, the preset condition includes a preset temperature and/or a preset pressure. The preset condition includes the preset temperature and/or the preset pressure, which facilitates the expansion of the expansion layer to quickly cut off the electrical connection between the positive electrode plate and the negative electrode plate and further reduce the occurrence of thermal runaway inside the battery, thereby improving the safety performance of the battery.

In some embodiments of the present application, the preset condition includes a preset temperature, which is greater than or equal to 80°C, optionally 110°C to 150°C. The preset condition includes the preset temperature within the above range, which facilitates the expansion of the expansion layer in response to the preset condition to further reduce the occurrence of thermal runaway inside the battery, thereby further improving the safety performance of the battery.

In some examples, the preset temperature may be, but is not limited to, 80°C, 81°C, 82°C, 83°C, 84°C, 85°C, 86°C, 87°C, 88°C, 89°C, 90°C, 91°C, 92°C, 93°C, 94°C, 95°C, 96°C, 97°C, 98°C, 99°C, 100°C, 101°C, 102°C, 103°C, 104°C, 105°C, 106°C, 107°C, 108°C, 109°C, 110°C, 111°C, 112°C, 113°C, 114°C, 115°C, 116°C, 117°C, 118°C, 119°C, 120°C, 121°C, 122°C, 123°C, 124°C, 125°C 126°C, 127°C, 128°C, 129°C, 130°C, 131°C, 132°C, 133°C, 134°C, 135°C, 136°C, 137°C, 138°C, 139°C, 140°C, 141°C, 142°C, 143°C, 144°C, 145°C, 146°C, 147°C, 148°C, 149°C, 150°C, or within a range consisting of any two of the above values, for example, the range of the preset temperature may be, but is not limited to, 81°C to 148°C, 85°C to 145°C, 88°C to 140°C, 92°C to 134°C, 95°C to 130°C, 99°C to 125°C, or 102°C to 120°C.

In some embodiments of the present application, an expansion rate of the expansion layer in a thickness direction under the preset condition is 50% to 2000%, optionally 150% to 1000%. The expansion layer having the expansion rate within the above range can not only spread more short-circuit points, but also wrap more dendrites on the short-circuit points, to cut off more electrical connection points between the positive electrode plate and the negative electrode plate and further reduce the occurrence of thermal runaway inside the battery, thereby improving the safety performance of the battery.

In the present application, the expansion rate refers to a ratio percentage of the difference in the thickness of a coating before and after expansion versus the thickness of the coating before expansion, and can be measured using a method well known in the art. For example, the expansion rate can be measured by the following steps: taking a separator (1 cm $\times$ 1 cm) coated with an expansion layer, flushing residual electrolytic solution on its surface with anhydrous ethanol, then drying the separator in a vacuum drying oven at 45°C for 60 minutes, measuring the thickness Ha of the expansion layer in the cross-section of the separator using SEM, placing the separator at a trigger temperature of the expansion layer (such as 120°C), and standing for 30 minutes; then taking out and cooling the separator for 30 minutes, measuring the thickness Hb of the expansion layer in the cross-section of the separator using SEM, and calculating the expansion rate according to a formula that the expansion rate is equal to (Hb - Ha)/Ha $\times$ 100%.

In some examples, the expansion rate of the expansion layer in the thickness direction under the preset condition may be, but is not limited to, 50%, 100%, 150%, 200%, 250%, 300%, 350%, 400%, 450%, 500%, 550%, 600%, 650%, 700%, 750%, 800%, 850%, 900%, 950%, 1000%, 1050%, 1100%, 1150%, 1200%, 1250%, 1300%, 1350%, 1400%, 1450%, 1500%, 1550%, 1600%, 1650%, 1700%, 1750%, 1800%, 1850%, 1900%, 1950%, 2000%, or within a range consisting of any two of the above values, for example, the range of the expansion rate of the expansion layer in the thickness direction under the preset condition may be, but is not limited to, 100% to 1950%, 150% to 1800%, 250% to 1700%, 300% to 1600%, 400% to 1550%, 550% to 1400%, 600% to 1350%, or 700% to 1250%.

In some embodiments of the present application, the expansion layer includes thermal expansion particles and a conductive agent, and based on a mass of the expansion layer, a mass ratio of the thermal expansion particles to the conductive agent is (1-6): 1. The expansion layer includes the thermal expansion particles and the conductive agent, and when the mass ratio of the thermal expansion particles to the conductive agent satisfies the above relationship, the occurrence of thermal runaway inside the battery can be reduced, and the resistance of the expansion layer can also be reduced, thereby improving the safety and cycle performance of the battery.

In some embodiments of the present application, a mass percentage of the thermal expansion particles in the expansion layer is 60% to 85%. When the mass percentage of the thermal expansion particles in the expansion layer is within the above range, the thermal runaway of the battery can be reduced, thereby improving the safety performance of the battery.

In some examples, the mass percentage of the thermal expansion particles in the expansion layer may be, but is not limited to, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, or within a range consisting of any two of the above values, for example, the range of the mass percentage of the thermal expansion particles in the expansion layer may be 61% to 84%, 64% to 80%, or 67% to 76%.

In some embodiments of the present application, a mass percentage of the conductive agent in the expansion layer is 15% to 35%. When the mass percentage of the conductive agent in the expansion layer is within the above range, the resistance of the expansion layer can be reduced to improve the cycle performance of the battery.

In some examples, the mass percentage of the conductive agent in the expansion layer may be, but is not limited to, 15%, 16%, 17%, 18%, 19%, 20%, 21%, 22%, 23%, 24%, 25%, 26%, 27%, 28%, 29%, 30%, 31%, 32%, 33%, 34%, 35%, or within a range consisting of any two of the above values, for example, the range of the mass percentage of the conductive agent in the expansion layer may be 16% to 34%, 18% to 32%, 20% to 30%, or 21% to 28%.

In some embodiments of the present application, a material of the thermal expansion particles includes at least one or polyacrylonitrile or polymethylacrylonitrile.

In some embodiments of the present application, the conductive agent may include at least one of graphite, superconducting carbon, acetylene black, carbon black, Ketjen black, carbon dots, carbon nanotubes, graphene, or carbon nanofibers.

In some embodiments of the present application, the expansion layer further includes a preset temperature regulator, and a mass percentage of the preset temperature regulator in the expansion layer is 0.1% to 15%, optionally 0.5% to 10%. The expansion layer includes the preset temperature regulator, and when the mass percentage of the preset temperature regulator in the expansion layer is within the above range, the response sensitivity of the expansion layer can be improved to further improve the safety performance of the battery.

In some examples, the mass percentage of the preset temperature regulator in the expansion layer may be, but is not limited to, 0.1%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, 10.5%, 11%, 11.5%, 12%, 12.5%, 13%, 13.5%, 14%, 14.5%, 15%, or within a range consisting of any two of the above values, for example, the range of the mass percentage of the preset temperature regulator in the expansion layer may be, but is not limited to, 0.5% to 14.5%, 1% to 13.5%, 2% to 12%, 2.5% to 11.5%, 4% to 10.5%, 4.5% to 10%, or 5% to 9%.

In some embodiments of the present application, the preset temperature regulator includes at least one of vinylidene chloride, acrylic ester, methacrylonitrile, sodium chloride, citric acid, or potassium dichromate.

In other embodiments of the present application, the expansion layer further includes a hydrophilic polar monomer, which can help improve the puncture strength of the expansion layer and enables the expansion of the expansion layer to spread short-circuit points and wrap dendrites at the short-circuit points, thereby further improving the safety performance of the battery.

In some examples, the hydrophilic monomer may include, but is not limited to, monomers such as methyl methacrylate and acrylamide.

In some embodiments of the present application, the expansion layer is disposed on a side of the negative electrode plate facing the separator. The position of the expansion layer enables the expansion layer after expansion to quickly spread dendrites at short-circuit points, thereby reducing the occurrence of thermal runaway and improving the safety performance of the battery.

In some embodiments of the present application, the expansion layer is disposed on a side of the positive electrode plate facing the separator. The position of the expansion layer enables the expansion layer after expansion to wrap dendrites at short-circuit points, thereby cutting off the electrical connection between the positive electrode plate and the negative electrode plate to reduce the occurrence of thermal runaway and improving the safety performance of the battery.

In some embodiments of the present application, the expansion layer is disposed on a side of the separator. The position of the expansion layer enables the expansion layer after expansion to wrap dendrites at short-circuit points, thereby cutting off the electrical connection between the positive electrode plate and the negative electrode plate to reduce the occurrence of thermal runaway and improving the safety performance of the battery.

In some embodiments of the present application, the expansion layer includes at least one of a stripe-like expansion layer, a netlike expansion layer, or a dotlike expansion layer. The expansion layer in the above shape can help improve the safety and cycle performance of the battery.

It can be understood that the expansion layer may include at least one of the netlike expansion layer, the dotlike expansion layer, or the stripe-like expansion layer, which is not limited by the embodiments of the present application.

In the present application, the shape of the expansion layer can be represented by a method well known in the art, for example, the shape of the expansion layer can be observed by scanning electron microscopy (SEM).

In some embodiments of the present application, the positive electrode plate includes a positive electrode current collector and a positive electrode active material layer disposed on a side of the positive electrode current collector and including a positive electrode active material, and a thickness H1 of the expansion layer, a thickness H2 of the separator, and a thickness H3 of the positive electrode plate satisfy:

$$\alpha * H1 + (A * H3 * \rho_a) / (B/\rho_b) \leq H2$$

where $\alpha$ represents the expansion rate of the expansion layer in the thickness direction under the preset condition, A represents a gram capacity of the positive electrode plate, $\rho_a$ represents a density of the positive electrode active material, B represents a gram capacity of sodium metal, and $\rho_b$ represents a density of sodium metal.

It can be understood that the sum of the thickness of the expansion layer after expansion and the length of formed sodium dendrites is less than or equal to the thickness of the separator, which enables the expansion layer after expansion to spread dendrites at short-circuit points of the positive electrode plate and the negative electrode plate, and can also reduce the probability that dendrites formed in other regions puncture the separator, thereby further improving the safety performance of the battery.

In the present application, the thickness of the expansion layer, the thickness of the separator, and the thickness of the positive electrode plate all have well-known meanings in the art and can be measured using methods well known in the art, such as a micrometer (such as Mitutoyo 293-100 model, with precision of 0.1 $\mu$m).

In some embodiments of the present application, $\alpha$ is 150% to 2000%; and/or A is 90 mAh/g to 150 mAh/g. $\alpha$ within the above range enables the expansion layer after expansion to spread the dendrites at short-circuit points of the positive electrode plate and the negative electrode plate. A within the above range can help reduce the length of dendrites, thereby reducing the puncture of the separator by the dendrites in contact with the expansion layer after the expansion layer expands, and further improving the safety performance of the battery.

In some embodiments of the present application, the thickness H1 of the expansion layer is 0.1 $\mu$m to 10 $\mu$m. The thickness of the expansion layer within the above range enables the expansion layer after expansion to spread the dendrites at short-circuit points of the positive electrode plate and the negative electrode plate, and can further reduce the probability that the dendrites formed in other regions puncture the separator, thereby further improving the safety performance of the battery.

In some examples, the thickness of the expansion layer may be, but is not limited to, 0.1 $\mu$m, 0.5 $\mu$m, 1 $\mu$m, 1.5 $\mu$m, 2 $\mu$m, 2.5 $\mu$m, 3 $\mu$m, 3.5 $\mu$m, 4 $\mu$m, 4.5 $\mu$m, 5 $\mu$m, 5.5 $\mu$m, 6 $\mu$m, 6.5 $\mu$m, 7 $\mu$m, 7.5 $\mu$m, 8 $\mu$m, 8.5 $\mu$m, 9 $\mu$m, 9.5 $\mu$m, 10 $\mu$m, or within a range consisting of any two of the above values, for example, the range of the thickness of the expansion layer may be, but is not limited to, 0.5 $\mu$m to 9.5 $\mu$m, 1 $\mu$m to 9 $\mu$m, 1.5 $\mu$m to 8.5 $\mu$m, 2 $\mu$m to 8 $\mu$m, 2.5 $\mu$m to 7.5 $\mu$m, or 3 $\mu$m to 6.5 $\mu$m.

In some embodiments of the present application, the thickness H2 of the separator is 9 $\mu$m to 50 $\mu$m. The thickness of the separator within the above range can help reduce the probability that dendrites puncture the separator, which is beneficial to improving the safety performance of the battery.

In some examples, the thickness of the separator may be, but is not limited to, 9 $\mu$m, 10 $\mu$m, 11 $\mu$m, 12 $\mu$m, 13 $\mu$m, 14 $\mu$m, 15 $\mu$m, 16 $\mu$m, 17 $\mu$m, 18 $\mu$m, 19 $\mu$m, 20 $\mu$m, 21 $\mu$m, 22 $\mu$m, 23 $\mu$m, 24 $\mu$m, 25 $\mu$m, 26 $\mu$m, 27 $\mu$m, 28 $\mu$m, 29 $\mu$m, 30 $\mu$m, 31 $\mu$m, 32 $\mu$m, 33 $\mu$m, 34 $\mu$m, 35 $\mu$m, 36 $\mu$m, 37 $\mu$m, 38 $\mu$m, 39 $\mu$m, 40 $\mu$m, 41 $\mu$m, 42 $\mu$m, 43 $\mu$m, 44 $\mu$m, 45 $\mu$m, 46 $\mu$m, 47 $\mu$m, 48 $\mu$m, 49 $\mu$m, 50 $\mu$m, or within a range consisting of any two of the above values, for example, the range of the thickness of the separator may be, but is not limited to, 10 $\mu$m to 48 $\mu$m, 13 $\mu$m to 45 $\mu$m, 15 $\mu$m to 41 $\mu$m, 18 $\mu$m to 38 $\mu$m, 20 $\mu$m to 36 $\mu$m, 23 $\mu$m to 33 $\mu$m, or 25 $\mu$m to 31 $\mu$m.

In some embodiments of the present application, the thickness H3 of the positive electrode plate is 50 $\mu$m to 300 $\mu$m. The thickness of the positive electrode plate within the above range can help reduce the puncture of the separator by dendrites and improve the cycle performance of the battery.

In some embodiments of the present application, an air permeability of the separator is 120s/100cc to 180s/100cc. When the air permeability of the separator is within the above range, the separator can have good air permeability, thereby improving ion transport characteristics and reducing battery resistance to improve the cycle performance of the battery.

In some embodiments of the present application, a puncture strength of the separator is 0.05 N/$\mu$m to 0.5 N/$\mu$m.

In some embodiments of the present application, an elongation of the separator at break is greater than or equal to 7%.

In some embodiments of the present application, a longitudinal tensile strength of the separator is greater than or equal to 120 MPa.

In some embodiments of the present application, a transverse tensile strength of the separator is greater than or equal to 10 MPa, optionally 20 MPa to 80 MPa.

In the present application, the air permeability, puncture strength, elongation at break, and tensile strengths of the separator all have meanings known in the art and can be measured using methods known in the art, for example, tested with reference to the standards GB/T 36363-2018.

In some embodiments of the present application, a surface density of the separator is 3 g/m$^2$ to 6 g/m$^2$.

In some embodiments of the present application, the separator includes a porous structure with a plurality of pores and has a porosity of 20% to 50%.

In the present application, the porosity has a meaning known in the art, and refers to a ratio of a volume of pores in a material to a total volume of the material, and can be measured using instruments and methods known in the art. For example, with reference to the national standards GB/T 24586-2009 in which the apparent density, true density, and porosity of iron ore can be measured, the porosity can be tested using the AccuPyc II 1340 fully automatic true density tester from Micromeritics in the United States. Porosity = (V1 - V2)/ V1 * 100%, where V1 refers to an apparent volume of a material and V2 refers to a true volume of the material. V1 can be tested using a mercury intrusion method, and V2 can be tested using a nitrogen gas adsorption method.

In the embodiments of the present application, the material of the separator is not limited, and any known separator with good chemical and mechanical stability is available. For example, the separator may include at least one of porous polyolefin resin films (such as one or more of polyethylene, polypropylene, and polyvinylidene fluoride), porous glass fibers, or porous non-woven fabrics. The porous separator may be a single-layer film or a multi-layer composite film. When the porous separator is a multi-layer composite film, the materials of the layers may be the same or different.

In some embodiments of the present application, the positive electrode plate includes a positive electrode current collector and a positive electrode active material layer disposed on a side of the positive electrode current collector and including a positive electrode active material. The embodiments of the present application do not limit the positive electrode current collector and the positive electrode active material, and can use positive electrode current collectors and positive electrode active materials known in the art.

In some embodiments of the present application, the positive electrode active material may include at least one of sodium transition metal oxides, polyanionic compounds, or Prussian blue compounds. In other embodiments of the present application, other known materials can be used as positive electrode active materials for sodium-ion batteries.

In some examples, transition metals in the sodium transition metal oxides may include at least one of Mn, Fe, Ni, Co, Cr, Cu, Ti, Zn, V, Zr, or Ce. For example, when the sodium transition metal oxide is $Na_xMO_2$, M may be at least one of Ti, V, Mn, Co, Ni, Fe, Cr, or Cu, where $0 < x \leq 1$.

In other examples, the polyanionic compounds may be a type of compounds with sodium ions, transition metal ions, and tetrahedral $(YO_4)^{n-}$ anion units, where transition metals may include at least one of Mn, Fe, Ni, Co, Cr, Cu, Ti, Zn, V, Zr, or Ce, Y may include at least one of P, S, or Si, where n represents a valence state of $(YO_4)^{n-}$.

The polyanionic compounds may alternatively be a type of compounds with sodium ions, transition metal ions, tetrahedral $(YO_4)^{n-}$ anion units, and halogen anions, where transition metals may include at least one of Mn, Fe, Ni, Co, Cr, Cu, Ti, Zn, V, Zr, or Ce, Y may include at least one of P, S, or Si, n represents a valence state of $(YO_4)^{n-}$, and halogens may include at least one of F, Cl, or Br.

In some specific embodiments, the polyanionic compounds may include at least one of $NaFePO_4$, $Na_3V_2(PO_4)_3$, $NaM'PO_4F$ (M' includes at least one of V, Fe, Mn, or Ni), or $Na_3(VO_y)_2(PO_4)_2F_{3-2y}$ ($0 \leq y \leq 1$).

In some examples, the Prussian blue compounds may be a type of compounds with sodium ions, transition metal ions, and cyanide ions $(CN^-)$. Transition metals may be at least one of Mn, Fe, Ni, Co, Cr, Cu, Ti, Zn, V, Zr, or Ce. The Prussian blue compounds may be, for example, $Na_aMe_bMe'_c(CN)_6$, where Me and Me' respectively include at least one of Ni, Cu, Fe, Mn, Co, or Zn, where $0 < a \leq 2$, $0 < b < 1$, and $0 < c < 1$.

In some embodiments of the present application, the positive electrode active material layer may further include a conductive agent and a binder. The embodiments of the present application do not specifically limit the types of the conductive agent and the binder in the positive electrode active material layer, which can be selected according to actual needs.

For example, the conductive agent may be, but is not limited to, at least one of graphite, superconducting carbon, acetylene black, carbon black, Ketjen black, carbon dots, carbon nanotubes, graphene, or carbon nanofibers; the binder may be, but is not limited to, at least one of styrene butadiene rubber (SBR), waterborne acrylic resin, carboxymethyl cellulose (CMC), polyvinylidene fluoride (PVDF), polytetrafluoroethylene (PTFE), polyvinyl butyral (PVB), ethylene-vinyl acetate copolymer (EVA), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, fluorinated acrylic resin, or polyvinyl alcohol (PVA).

In some embodiments of the present application, the positive electrode current collector may be made of a material such as a metal foil or a porous metal plate. For example, the material of the positive electrode current collector may be, but is not limited to, a foil or porous plate made of metals such as copper, nickel, titanium, silver, or alloys thereof. Further, in some specific embodiments of the present application, an aluminum foil is used as the positive electrode current collector.

In the embodiments of the present application, the positive electrode active material, the conductive agent, and the binder are thoroughly stirred and mixed in an appropriate amount of N-methylpyrrolidone (NMP) at a certain mass ratio to form a uniform positive electrode slurry; the positive electrode slurry is applied to the surface of the positive electrode current collector aluminum foil, and the positive electrode plate is obtained after drying, cold pressing, and die cutting.

In some embodiments of the present application, the negative electrode plate includes a negative electrode current collector. In some examples, the negative electrode current collector may be made of a material with electronic conductivity. For example, the material of the negative electrode current collector may be a copper foil, a nickel foil, a stainless steel foil, etc.

In some embodiments of the present application, the negative electrode plate may further include a negative electrode active material layer disposed on one side of the negative electrode current collector and including a negative electrode active material, but the type of the negative electrode active material is not limited and can be selected by those skilled in the art according to actual needs. For example, the negative electrode active material may include at least one of carbon materials, alloy materials, transition metal oxides, transition metal sulfides, phosphorus-based materials, or titanate materials. In some specific embodiments, the negative electrode active material includes carbon materials.

In some examples, the carbon materials may include at least one of natural graphite, artificial graphite, mesocarbon microbeads (MCMB), hard carbon, or soft carbon. The alloy materials may include at least one of alloy materials composed of Si, Ge, Sn, Pb, and Sb. A chemical formula of the transition metal oxides is, for example, $M^1_uO_v$, where $M^1$ may be at least one of Fe, Co, Ni, Cu, Mn, Sn, Mo, Sb, or V, au=2v, and a is a valence state of $M^1$. A chemical formula of the transition metal sulfides is, for example, $M^2_iS_j$, where $M^2$ may include at least one of Fe, Co, Ni, Cu, Mn, Sn, Mo, Sb, or V, bi=2j, and b is a valence state of $M^2$. The phosphorus-based materials may include at least one of red phosphorus, white phosphorus, or black phosphorus. The titanate materials may include at least one of $Na_2Ti_3O_7$, $Na_2Ti_6O_{13}$, $Na_4Ti_5O_{12}$, $Li_4Ti_5O_{12}$, or $NaTi_2(PO_4)_3$.

In some embodiments of the present application, the negative electrode active material layer may further include a conductive agent and a binder. The embodiments of the present application do not specifically limit the types of the conductive agent and the binder in the negative electrode active material layer, which can be selected according to actual needs.

For example, the conductive agent may be, but is not limited to, at least one of graphite, superconducting carbon, acetylene black, carbon black, Ketjen black, carbon dots, carbon nanotubes, graphene, or carbon nanofibers; the binder may be, but is not limited to, at least one of styrene butadiene rubber (SBR), polyvinylidene fluoride (PVDF), polytetrafluoroethylene (PTFE), polyvinyl butyral (PVB), waterborne acrylic resin, or carboxymethyl cellulose (CMC).

In the embodiments of the present application, the negative electrode active material, the conductive agent, and the binder are mixed in a certain mass ratio and thoroughly stirred in an appropriate amount of deionized water to form a uniform negative electrode slurry; the negative electrode slurry is applied to the surface of the negative electrode current collector, and the negative electrode plate is obtained after drying, cold pressing, and die cutting.

In the embodiments of the present application, the electrode assembly may be produced using methods known in the art, for example, the positive electrode plate, the separator, and the negative electrode plate may be wound and/or stacked to form the electrode assembly, where at least one of the positive electrode plate, the separator, and the negative electrode plate is coated with the expansion layer.

## Battery cell

In a second aspect, the present application provides a battery cell, including the electrode assembly as described in the first aspect of the present application.

In some embodiments of the present application, the battery cell further includes an electrolyte, and the electrolyte includes an organic solvent and an electrolyte sodium salt. The types of the electrolyte sodium salt and the organic solvent are not specifically limited and can be selected according to actual needs. The electrolyte may include an organic solvent and an electrolyte sodium salt.

In some embodiments of the present application, the organic solvent includes ether organic solvents, for example, the ether organic solvents include at least one of diethylene glycol dimethyl ether, triethylene glycol dimethyl ether, tetraethylene glycol dimethyl ether, or tetrahydrofuran.

In some embodiments of the present application, a molar concentration of the electrolyte sodium salt in the electrolyte is 0.5 mol/L to 3 mol/L, and the electrolyte sodium salt may include at least one of sodium hexafluorophosphate, sodium fluoroborate, sodium bis(trifluoromethanesulfonyl) imide, sodium bis(fluorosulfonyl) imide, or sodium oxalate borate.

In some embodiments of the present application, the electrolyte may further optionally include additives. For example, the additives may include a negative electrode film-forming additive, a positive electrode film-forming additive, and additives that can improve some performance of the battery cell, such as an additive that improves the overcharge performance of the battery cell, an additive that improves the high-temperature performance of the battery cell, and an additive that improves the low-temperature power performance of the battery cell.

In some embodiments of the present application, the battery cell may further include an outer package. The outer package can be used for packing the aforementioned electrode assembly and electrolyte.

In some embodiments of the present application, the outer package of the battery cell may be a hard shell, such as a hard plastic shell, an aluminum shell, or a steel shell. The outer package of the battery cell may alternatively be a soft package, such as a pouch type soft package. The material of the soft package may be plastic, such as at least one of polypropylene (PP), polybutylene terephthalate (PBT), and polybutylene succinate (PBS).

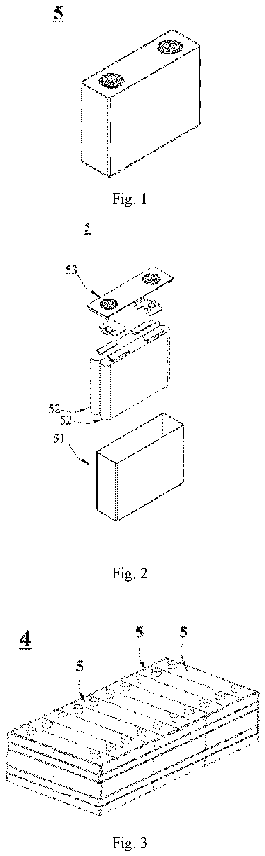

The present application does not limit the shape of the battery cell. The battery cell may be in a cylindrical, square, or any other shape. Fig. 1 shows a square battery cell 5 as an example.

In some embodiments of the present application, as shown in Fig. 2, the outer package may include a shell 51 and a cover plate 53. The shell 51 may include a bottom plate and side plates connected to the bottom plate, and the bottom plate and the side plates enclose an accommodating cavity. The shell 51 has an opening in communication with the accommodating cavity, and the cover plate 53 is closed to the opening to seal the accommodating cavity. The positive electrode plate, the negative electrode plate, and the separator may be wound and/or stacked to form an electrode assembly 52. The electrode assembly 52 is packaged in the accommodating cavity. An electrolyte infiltrates the electrode assembly 52. The battery cell 5 may include at least one electrode assemblies 52, which may be adjusted according to a demand.

The method for producing the battery cell of the present application is well known. In some embodiments of the present application, the positive electrode plate, the separator, the negative electrode plate, and the electrolyte may be assembled to form the battery cell. As an example, the positive electrode plate, the separator, the expansion layer, and the negative electrode plate may be wound and/or stacked to form the electrode assembly, the electrode assembly is placed in the outer package, the electrolyte is injected after drying, and the battery cell is obtained after vacuum packaging, standing, chemical transformation, shaping, etc.

## Battery

In a third aspect, the present application provides a battery, including the battery cell in the second aspect of the present application.

In the embodiments of the present application, in order to meet different power requirements, the battery may include a plurality of battery cells, which refer to minimum units that constitute a battery module or battery pack. The plurality of battery cells may be connected in series and/or in parallel via electrode terminals for various applications. The battery mentioned in the embodiments of the present application includes a battery module or battery pack. The plurality of battery cells may be connected in series, in parallel, or in series and parallel. The series and parallel connection refers to a combination of series connection and parallel connection. In the embodiments of the present application, the plurality of battery cells may be directly combined into a battery pack, or may be first combined into a battery module, which then forms a battery pack.

In some embodiments of the present application, the battery cell according to the second aspect of the present application may be assembled into a battery module, the battery module may include a plurality of battery cells, and the specific quantity can be adjusted according to the application and capacity of the battery module.

Fig. 3 is a schematic structural view of a battery module as an example. As shown in Fig. 3, in the battery module 4, the plurality of battery cells 5 may be arranged sequentially in a length direction of the battery module 4. Alternatively, the battery cells may be arranged in any other manner. Further, the plurality of battery cells 5 may be fixed by fasteners.

Optionally, the battery module 4 may further include a housing with an accommodating space, and the plurality of battery cells 5 are accommodated in the accommodating space.

In some embodiments of the present application, the battery module can be assembled into a battery pack, and the quantity of battery modules included in the battery pack can be adjusted according to the application and capacity of the battery pack.

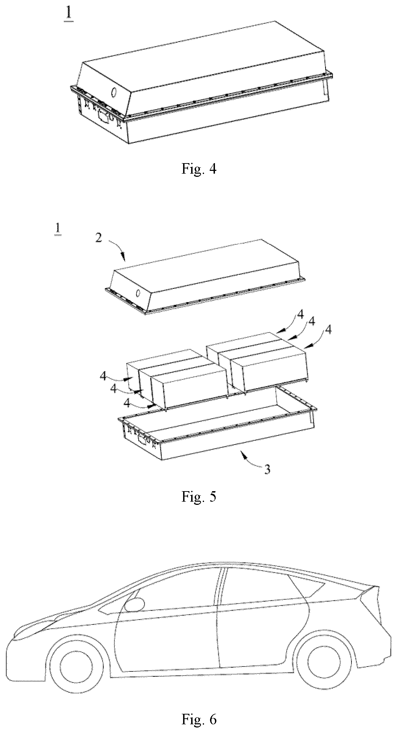

Fig. 4 and Fig. 5 are schematic structural views of a battery pack as an example. As shown in Fig. 4 and Fig. 5, the battery pack 1 may include a battery box and a plurality of battery modules 4 disposed in the battery box. The battery box includes an upper box 2 and a lower box 3. The upper box 2 fits on the lower box 3 to form a closed space for accommodating the battery modules 4. The plurality of battery modules 4 may be arranged in the battery box in any manner.

## Electrical device

In a fourth aspect, the present application provides an electrical device, which includes at least one of the battery cell, the battery module, or the battery pack in the second aspect of the present application. The battery cell, the battery module, or the battery pack may be used as a power supply for the electrical device or as an energy storage unit of the electrical device.

In the present application, the electrical device may include, but is not limited to, a mobile phone, a tablet, a laptop, an electric toy, an electric tool, a scooter, an electric vehicle, a ship, a spacecraft, an energy storage system, etc. The electric toy may include a fixed or mobile electric toy, such as a game console, an electric car toy, an electric ship toy, or an electric aircraft toy. The spacecraft may include an airplane, a rocket, a space shuttle, a spaceship, etc.

Moreover, the electrical device may include the battery cell, battery module, or battery pack according to its usage requirements.

Fig. 6 is a schematic structural view of an electrical device as an example. The electrical device is a full electric vehicle, a hybrid electric vehicle, a plug-in hybrid electric vehicle, or the like. In order to meet the requirements of the electrical device for high power and high energy density, the battery pack or the battery module may be used.

The following embodiments more specifically describe the content disclosed in the present application, and these embodiments are only used for explanatory description, because various modifications and changes made within the scope of the content disclosed in the present application are apparent to those skilled in the art. All reagents used in the examples are commercially available or synthesized according to conventional methods and can be directly used without further treatment, and all instruments used in the examples are commercially available.

**Embodiment 1**

Production of a positive electrode plate

A positive electrode active material $NaMnKFe(CN)_6$, a conductive agent acetylene black, and a binder carboxymethyl cellulose were thoroughly stirred and mixed in an appropriate amount of N-methylpyrrolidone (NMP) at a mass ratio of 95: 2: 3 to form a uniform positive electrode slurry; the positive electrode slurry was applied to the surface of a positive electrode current collector aluminum foil, and a positive electrode plate having a thickness of 175 $\mu$m was obtained after drying, cold pressing, and die cutting.

Production of a negative electrode plate

A negative electrode active material artificial graphite, a conductive agent acetylene black, and a binder carboxymethyl cellulose were mixed in a mass ratio of 94: 5: 1 and thoroughly stirred in an appropriate amount of deionized water to form a uniform negative electrode slurry; the negative electrode slurry was applied to the surface of a negative electrode current collector copper foil, and a negative electrode plate was obtained after drying, cold pressing, and die cutting.

Separator

A polyethylene film having a thickness of 9 $\mu$m was used.

Production of an expansion layer

Thermal expansion polymethacrylonitrile particles and a binder carboxymethyl cellulose were mixed in a mass ratio of 1.86: 1 to form a slurry; the slurry was applied to the side of the separator facing the negative electrode plate, and dried to form an expansion layer having a thickness of 1 $\mu$m.

Production of an electrolyte

Ethylene carbonate, sodium hexafluorophosphate, and boron-containing additives were mixed in a mass ratio of 85: 10: 5 to obtain a sodium salt electrolyte.

Production of a sodium-ion secondary battery

The positive electrode plate, the separator coated with the expansion layer, and the negative electrode plate were wound and/or stacked to form an electrode assembly, the electrode assembly was placed in an outer package, the electrolyte was injected after drying, and a sodium-ion secondary battery was obtained after vacuum packaging, standing, chemical transformation, shaping, etc.

**Embodiments 2-10**

Similar to the producing method in Embodiment 1, the difference lied in the composition and content of the expansion layer.

**Comparative Example 1**

Similar to the producing method in Embodiment 1, the difference was that there was no expansion layer in the electrode assembly.

**Test section**

(1) Expansion rate test

A separator (1 cm $\times$ 1 cm) coated with an expansion layer was taken, residual electrolyte on its surface was flushed with anhydrous ethanol, then the separator was placed in a vacuum drying oven at 45°C and dried for 60 minutes, the thickness Ha of the expansion layer in the cross-section of the separator was measured using SEM, and the separator was placed at a trigger temperature of the expansion layer (such as 120°C), and stood for 30 minutes; then the separator was taken out and cooled for 30 minutes, the thickness Hb of the expansion layer in the cross-section of the separator was measured using SEM, and the expansion rate was calculated according to a formula that the expansion rate is equal to (Hb - Ha)/Ha $\times$ 100%.

(2) Overcharge failure test

40 batteries were taken from the same batch, stood at 25°C for 2 hours, discharged at a rate of 0.33C to a rated voltage of 1.5V, and stood for 2 hours. The batteries were charged with a constant current of 1C to a rated voltage of 4.2V, then the capacity of the batteries was 100% SOC, and the charging capacity was C1. The batteries were continuously charged with 1C to a capacity of 0.4C1, and the batteries were overcharged to 140% SOC. A proportion of smoking and burnt batteries in the charging process from 100% SOC to 140% SOC, namely, a failure rate, was calculated.

Table 1 lists relevant parameters and test results of the expansion layer in Examples 1-10 and Comparative Example 1, respectively.

Table 1

| Number | Expansion layer | | Preset temperature | Expansion rate | Failure rate |
| | Material of thermal expansion particles, mass% | Binder, mass % | | | |
|---|---|---|---|---|---|
| Example 1 | Polymethacrylonitrile 65% | 35% | 110°C | 210% | 62.5% |
| Example 2 | Polymethacrylonitrile 69% | 31% | 110°C | 250% | 55% |
| Example 3 | Polymethacrylonitrile 75% | 25% | 110°C | 280% | 50% |
| Example 4 | Polymethacrylonitrile 79% | 21% | 110°C | 320% | 42.5% |
| Example 5 | Polymethacrylonitrile 85% | 15% | 110°C | 360% | 37.5% |
| Example 6 | Polyacrylonitrile 75% | 25% | 140°C | 160% | 67.5% |
| Example 7 | Barium azodicarboxylate 75% | 25% | 130°C | 400% | 32.5% |
| Example 8 | Diisopropyl azodicarboxylate 75% | 25% | 120°C | 860% | 27.5% |
| Example 9 | N,N'-dimethyl-N,N'-dinitroso-p-terephthalamide 75% | 25% | 110°C | 1100% | 25% |
| Example 10 | Methyl methacrylate 75% | 25% | 90°C | 1500% | 5% |
| Comparative Example 1 | No expansion layer | / | / | / | 97.5% |

According to Table 1, comparing the test results of Embodiments 1-10 and Comparative Example 1, it can be seen that in the electrode assembly provided in the present application, an expansion layer is provided on a side of the separator; when the electrode assembly is applied to a battery, metal dendrites are produced inside the battery during use; the dendrites growing to a certain extent puncture the separator and electrically connect the positive electrode plate and the negative electrode plate to cause short circuits inside the battery, then the preset condition is satisfied, and the expansion layer expands in response to the preset condition to spread short-circuit points of the positive electrode plate and the negative electrode plate and wrap the dendrites at the short-circuit points, so that the electrical connection between the positive electrode plate and the negative electrode plate is cut off, the occurrence of thermal runaway inside the battery is reduced, and the battery has good safety performance.

Finally, it should be noted that the foregoing embodiments are only used to describe, but not to limit, the technical solutions of the present application. Although the present application is described in detail with reference to the foregoing embodiments, those of ordinary skill in the art should understand that they can still make modifications to the technical solutions described in the foregoing embodiments or make equivalent substitutions to some or all technical features thereof. These modifications or substitutions do not make the essences of the corresponding technical solutions depart from the scope of the technical solutions of the embodiments of the present application, and shall fall within the scope of the claims and specification of the present application. In particular, as long as there is no structural conflict, various technical features mentioned in the embodiments can be combined in any way. The present application is not limited to the specific embodiments disclosed herein, but includes all technical solutions falling within the scope of the claims.

**Claims**

1. An electrode assembly, comprising:

   a positive electrode plate;
   a negative electrode plate;
   a separator disposed between the positive electrode plate and the negative electrode plate; and
   an expansion layer disposed between the positive electrode plate and the negative electrode plate, wherein the expansion layer is configured for expanding in response to a preset condition to cut off an electrical connection between the positive electrode plate and the negative electrode plate.

2. The electrode assembly according to claim 1, wherein the preset condition comprises a preset temperature and/or a preset pressure.

3. The electrode assembly according to claim 1, wherein the preset condition comprises a preset temperature, which is greater than or equal to 80°C, optionally 110°C to 150°C.

4. The electrode assembly according to any one of claims 1-3, wherein an expansion rate of the expansion layer in a thickness direction under the preset condition is 50% to 2000%, optionally 150% to 1000%.

5. The electrode assembly according to any one of claims 1-4, wherein the expansion layer comprises thermal expansion particles and a conductive agent, and a mass ratio of the thermal expansion particles to the conductive agent is (1-6): 1 based on a mass of the expansion layer.

6. The electrode assembly according to claim 5, wherein a mass percentage of the thermal expansion particles in the expansion layer is 60% to 85%; and/or
   a mass percentage of the conductive agent in the expansion layer is 15% to 35%.

7. The electrode assembly according to claim 5 or 6, wherein a material of the thermal expansion particles comprises at least one of polyacrylonitrile, polymethacrylonitrile, N,N'-dimethyl-N,N'-dinitroso-p-terephthalamide, barium azodicarboxylate, or diisopropyl azodicarboxylate.

8. The electrode assembly according to claim 5 or 6, wherein the expansion layer further comprises a preset temperature regulator, a mass percentage of the preset temperature regulator in the expansion layer being 0.1% to 15%, optionally 0.5% to 10%.

9. The electrode assembly according to claim 8, wherein the preset temperature regulator comprises at least one of vinylidene chloride, acrylic ester, methacrylonitrile, sodium chloride, citric acid, or potassium dichromate.

10. The electrode assembly according to any one of claims 1-9, wherein the expansion layer is disposed on a side of the negative electrode plate facing the separator; and/or

    the expansion layer is disposed on a side of the positive electrode plate facing the separator; and/or
    the expansion layer is disposed on a side of the separator.

11. The electrode assembly according to any one of claims 1-10, wherein the expansion layer comprises at least one of a stripe-like expansion layer, a netlike expansion layer, or a dotlikelike expansion layer.

12. The electrode assembly according to any one of claims 1-11, wherein the positive electrode plate comprises a positive electrode current collector and a positive electrode active material layer, the positive electrode active material layer being disposed on a side of the positive electrode current collector and comprising a positive electrode active material, and

a thickness H1 of the expansion layer, a thickness H2 of the separator, and a thickness H3 of the positive electrode plate satisfy:

$$\alpha * H1 + (A * H3 * \rho_a) / (B/\rho_b) \leq H2$$

in which $\alpha$ represents an expansion rate of the expansion layer in the thickness direction under the preset condition, A represents a gram capacity of the positive electrode plate, $\rho_a$ represents a density of the positive electrode active material, B represents a gram capacity of sodium metal, and $\rho_b$ represents a density of sodium metal.

13. The electrode assembly according to claim 12, wherein $\alpha$ is 150% to 2000%; and/or
A is 90 mAh/g to 150 mAh/g.

14. The electrode assembly according to claim 12 or 13, wherein the thickness H1 of the expansion layer is 0.1 $\mu$m to 10 $\mu$m; and/or

the thickness H2 of the separator is 9 $\mu$m to 50 $\mu$m; and/or
the thickness H3 of the positive electrode plate is 50 $\mu$m to 300 $\mu$m.

15. The electrode assembly according to any one of claims 1-14, wherein the separator satisfies at least one of the following features:

(I) an air permeability of the separator is 120s/100cc to 180s/100cc;
(II) a puncture strength of the separator is 0.05 N/$\mu$m to 0.5 N/$\mu$m;
(III) an elongation of the separator at break is greater than or equal to 7%;
(IV) a longitudinal tensile strength of the separator is greater than or equal to 120 MPa;
(V) a transverse tensile strength of the separator is greater than or equal to 10 MPa, optionally 20 MPa to 80 MPa;
(VI) a surface density of the separator is 3 g/m$^2$ to 6 g/m$^2$; or
(VII) the separator comprises a porous structure with a plurality of pores and has a porosity of 20% to 50%.

16. A battery cell, comprising the electrode assembly according to any one of claims 1-15.

17. A battery, comprising the battery cell according to claim 16.

18. An electrical device, comprising the battery according to claim 17.

Fig. 1

Fig. 2

Fig. 3

1

Fig. 4

Fig. 5

Fig. 6

| INTERNATIONAL SEARCH REPORT | International application No. |
|---|---|
| | **PCT/CN2023/124304** |

**A. CLASSIFICATION OF SUBJECT MATTER**

H01M50/489(2021.01)i; H01M50/40(2021.01)i

According to International Patent Classification (IPC) or to both national classification and IPC

**B. FIELDS SEARCHED**

Minimum documentation searched (classification system followed by classification symbols)

IPC: H01M50/-

Documentation searched other than minimum documentation to the extent that such documents are included in the fields searched

Electronic data base consulted during the international search (name of data base and, where practicable, search terms used)

CNTXT, DWPI, CNKI, STN, ISI: 电池, 正极, 负极, 膨胀, 热敏, 温度系数, 隔离膜, 隔离层, Battery, Positive Electrode, Negative Electrode, Expansion, Separator Film, Separator Layer

**C. DOCUMENTS CONSIDERED TO BE RELEVANT**

| Category* | Citation of document, with indication, where appropriate, of the relevant passages | Relevant to claim No. |
|---|---|---|
| PX | CN 219067142 U (HUIYANG CENTURY NEW ENERGY TECHNOLOGY CO., LTD.) 23 May 2023 (2023-05-23)<br>description, paragraphs 0007-0019 | 1-18 |
| X | CN 106374112 A (CHANG HONG ENERGY TECHNOLOGY CO., LTD.) 01 February 2017 (2017-02-01)<br>description, paragraphs 0012-0020 | 1-18 |
| X | CN 113678295 A (LG ENERGY SOLUTION LTD.) 19 November 2021 (2021-11-19)<br>description, paragraphs 0052-0131 | 1-18 |
| A | JP 2015191768 A (TOYOTA MOTOR CORP.) 02 November 2015 (2015-11-02)<br>entire description | 1-18 |
| A | KR 20180095982 A (LG CHEMICAL LTD.) 29 August 2018 (2018-08-29)<br>entire description | 1-18 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 November 2023** | **06 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/124304**

| Patent document cited in search report | | | Publication date (day/month/year) | Patent family member(s) | | | Publication date (day/month/year) |
|---|---|---|---|---|---|---|---|
| CN | 219067142 | U | 23 May 2023 | None | | | |
| CN | 106374112 | A | 01 February 2017 | TW | 201705590 | A | 01 February 2017 |
| | | | | TWI | 618287 | B | 11 March 2018 |
| CN | 113678295 | A | 19 November 2021 | EP | 3907810 | A1 | 10 November 2021 |
| | | | | EP | 3907810 | A4 | 13 April 2022 |
| | | | | JP | 2022516636 | A | 01 March 2022 |
| | | | | JP | 7213990 | B2 | 27 January 2023 |
| | | | | US | 2022094027 | A1 | 24 March 2022 |
| | | | | WO | 2021071125 | A1 | 15 April 2021 |
| | | | | KR | 20210043434 | A | 21 April 2021 |
| JP | 2015191768 | A | 02 November 2015 | None | | | |
| KR | 20180095982 | A | 29 August 2018 | KR | 102335202 | B1 | 03 December 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310075434